# EUROPÄISCHE PATENTSCHRIFT

(11) **EP 2 249 077 B1**
(45) Veröffentlichungstag und Bekanntmachung des Hinweises auf die Patenterteilung: **17.08.2011**
(21) Anmeldenummer: 09159649.4
(22) Anmeldetag: 07.05.2009
(51) Int. Cl.: F21V 21/005, H02G 3/06, F21S 2/00

(54) **Lichtband**
Light ribbon
Bande lumineuse

(43) Veröffentlichungstag der Anmeldung: 10.11.2010
(73) Patentinhaber: RIDI Leuchten GmbH, 72417 Jungingen (DE)
(72) Erfinder: Krajka, Michael, 72474 Winterlingen (DE)
(74) Vertreter: BRP Renaud & Partner

(56) Entgegenhaltungen:
- EP-A- 0 989 358
- DE-A1- 1 489 555
- DE-A1- 3 214 595
- DE-A1- 4 300 550
- DE-A1- 4 409 488
- DE-A1- 19 840 058
- DE-B- 1 235 677
- DE-T2- 69 835 474
- DE-U- 1 693 140
- DE-U- 1 789 301
- DE-U1- 29 806 095
- GB-A- 930 529

## Beschreibung

Die vorliegende Erfindung betrifft ein Lichtband mit mindestens zwei Leuchten, mit den Merkmalen des Oberbegriffs des Anspruchs 1.

Als Lichtband wird bspw. eine bandartige Aneinanderreihung von einzelnen Leuchten bezeichnet. Hierbei weist ein Lichtband z. B. eine Länge ab drei Metern auf. Innerhalb eines Lichtbandes ist auch die Verkabelung für die Energieversor gung von Leuchtmitteln der Leuchten vorgesehen. Eine durchgehende Verkabelung ermöglicht es, lediglich an einer Stelle das Lichtband mit Energie zu versorgen, indem die Verkabelung an die Gebäudeenergieversorgung angeschlossen wird. Werden mehrere Lichtbänder verwendet, so lassen sich diese teilweise untereinander verbinden, sodass nur ein Lichtband an die Gebäudeenergieversorgung angeschlossen werden muss.

Die einzelnen Leuchten, die innerhalb eines derartigen Lichtbands aufeinander folgen, weisen üblicherweise jeweils eine Tragschiene auf, an der zumindest ein Geräteträger befestigbar ist. An diesem Geräteträger befindet sich dann zumindest ein Leuchtmittel oder ein anderes, insbesondere elektrisches, Gerät. Über die Tragschiene erfolgt üblicherweise die Aufhängung bzw. Abhängung der jeweiligen Leuchte bzw. des Lichtbands an einer Gebäudedecke.

Um das Lichtband zu stabilisieren, ist es erforderlich, die aufeinander folgenden Leuchten aneinander zu befestigen bzw. miteinander zu verbinden. Bei einer entsprechend stabilen Verbindung aufeinander folgender Leuchten ist es insbesondere möglich, die erforderliche Anzahl an Abhängungen zu reduzieren, da die miteinander verbundenen Leuchten dann eine Einheit bilden. Insgesamt kann dadurch der Montageaufwand für das Lichtband reduziert werden.

Aus der DE 198 40 058 A1 ist ein gattungsgemäßes Lichtband bekannt. Weitere Lichtbänder sind aus der EP 0 989 358 A2 und aus der DE 1 235 677 bekannt.

Die vorliegende Erfindung beschäftigt sich mit dem Problem, für ein Lichtband der eingangs genannten Art eine verbesserte oder zumindest eine andere Ausführungsform anzugeben, die sich insbesondere dadurch auszeichnet, dass sie bei einfacher Montage eine besonders stabile Verbindung benachbarter Leuchten ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, mit Hilfe eines Verbinders die Tragschienen von zwei aufeinander folgenden Leuchten aneinander zu befestigen. Dabei besitzt der Verbinder zumindest im Bereich eines Basisabschnitts einen U-förmigen Querschnitt, in dem zwei Stegabschnitte vom Basisabschnitt abstehen. Ferner ist der Querschnitt des Verbinders im Basisabschnitt weitgehend komplementär zu einem Querschnitt der Tragschiene geformt, die als U-förmiger Profilkörper ausgestaltet ist und dementsprechend ein Basisprofil sowie zwei davon ausgehende Stegprofile aufweist. Der Verbinder ist hinsichtlich seiner Außenkontur so an die Innenkontur der Tragschienen adaptiert, dass er stirnseitig in die beiden miteinander zu verbindenden Tragschienen einsteckbar ist und im eingesteckten Zustand mit seiner Außenkontur flächig an der Innenkontur der jeweiligen Tragschiene anliegt. Hierdurch ergibt sich im Bereich des in die Tragschienen eingesteckten Verbinders eine effektive Aussteifung der Tragschienen, wodurch Kräfte und Momente übertragen werden können. Eine besonders hohe Stabilität der mit Hilfe des Verbinders geschaffenen Kopplung benachbarter Tragschienen wird beim hier vorgestellten Lichtband dadurch erreicht, dass die Stegabschnitte des Verbinders mit ihren vom Basisabschnitt entfernten Endbereichen in Taschen eingreifen, die an den Stegprofilen der jeweiligen Tragschiene an einem vom Basisprofil entfernten Endbereich ausgebildet sind. Durch das Eingreifen der Stegabschnitte in besagte Taschen der Stegprofile wird zum einen eine Lagefixierung durch Formschluss sowie insbesondere durch Kraftschluss bzw. Reibschluss zwischen dem Verbinder und den Tragschienen erreicht. Zum anderen kann eine vorgespannte Kontaktierung zwischen der Außenkontur des Verbinders und den Innenkonturen der Tragschienen unterstützt bzw. erreicht werden. Dabei ist von Vorteil, dass das Basisprofil der jeweiligen Tragschiene eine zum Inneren der Tragschiene offene Kammer ausbildet, die durch zwei parallel zu den Stegprofilen verlaufende Wandprofile und durch ein die Wandprofile miteinander verbindendes Bodenprofil begrenzt ist. Durch diese Ausgestaltung des Basisprofils ergibt sich eine signifikante Aussteifung der Tragschiene. Gleichzeitig kann die Kammer z.B. zur Unterbringung einer Verkabelung der Leuchten genutzt werden. Bei einer derartigen Konfiguration können am Basisabschnitt des Verbinders nach außen abstehende Wandabschnitte ausgebildet sein, die in die Kammer eingreifen und mit ihren voneinander abgewandten Außenseiten an einander zugewandten Innenseiten der Wandprofile anliegen. Hierdurch kann die Aussteifung der Längsenden der Tragschienen durch den eingesetzten Verbinder signifikant erhöht werden, was die Stabilität der Verbindung zwischen den benachbarten Leuchten erhöht.

Beim erfindungsgemäßen Lichtband formen die Wandprofile der Tragschienen jeweils einen Hinterschnitt aus, während gleichzeitig die Wandabschnitte des Verbinders so geformt sind, dass sie den jeweiligen Hinterschnitt des zugehörigen Wandprofils hintergreifen. Durch diese Bauweise können erhöhte Kräfte und Momente, insbesondere Biegemomente zwischen den mit Hilfe des Verbinders miteinander gekoppelten Tragschienen bzw. Leuchten übertragen werden. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte Seitenansicht eines Abschnitts eines Licht- bands,
- Fig. 2: eine perspektivische, auseinander gezogene Darstellung einer Leuchte,
- Fig. 3: eine Seitenansicht auf einen Verbindungsbereich aufeinander fol- gender Leuchten beim Herstellen der Verbindung,
- Fig. 4: eine perspektivische Ansicht des Verbindungsbereichs beim Her- stellen der Verbindung,
- Fig. 5: ein Querschnitt des Lichtbands entsprechend einer Schnittlinie V in Fig. 3,
- Fig. 6: eine perspektivische Ansicht eines Verbinders.

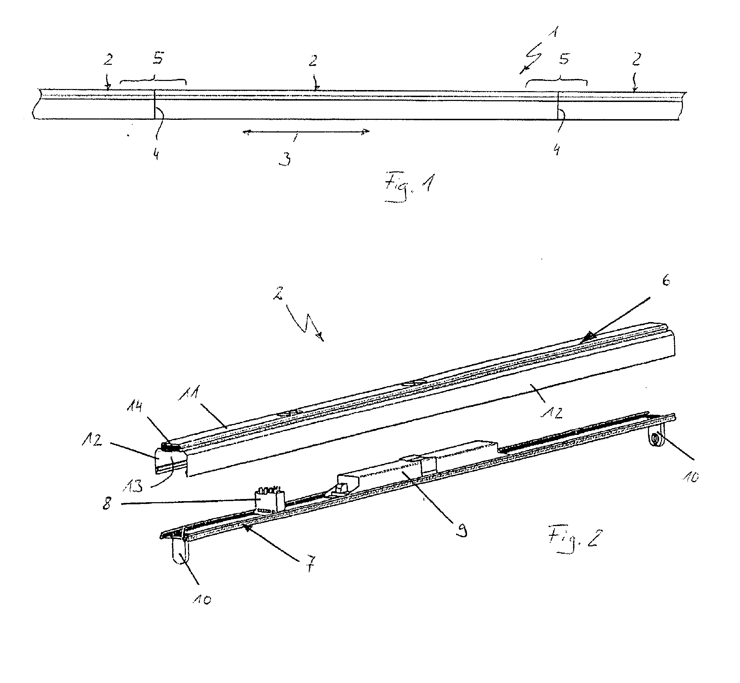

Entsprechend Fig. 1 umfasst ein nur teilweise dargestelltes Lichtband 1 zumindest zwei Leuchten 2, die in einer durch einen Doppelpfeil angedeuteten Längsrichtung 3 des Lichtbands 1 unmittelbar aufeinander folgen. Diese Längsrichtung 3 definiert dabei gleichzeitig eine Axialrichtung oder Achsrichtung des Lichtbands 1 sowie der Leuchten 2 und deren Komponenten. Dabei stoßen benachbarte Leuchten 2 stirnseitig bzw. axial aneinander. Entsprechende Stoßgrenzen sind in Fig. 1 mit 4 bezeichnet. Es ist klar, dass diese Stoßgrenzen 4 bei fertig gestelltem Lichtband 1 mit entsprechenden Dichtmitteln staubdicht und/oder feuchtigkeitsdicht ausgestaltet sein können. Im Bereich dieser Stoßgrenzen 4 erstreckt sich jeweils ein, durch eine geschweifte Klammer gekennzeichneter Verbindungsbereich 5, in dem die benachbarten Leuchten 2 aneinander befestigt sind.

Entsprechend Fig. 2 umfasst jede Leuchte 2 eine Tragschiene 6, an der zumindest ein Geräteträger 7 befestigbar ist. Im Beispiel besitzt der Geräteträger 7 die gleiche Länge wie die Tragschiene 6. Hierdurch ist die jeweilige Leuchte 2 auch als Einzelleuchte außerhalb eines Lichtbands 1 verwendbar. Sofern die Leuchte 2 in einem Lichtband 1 verwendet wird, ist es auch möglich, Geräteträger 7 zu verwenden, die länger sind als die einzelnen Tragschienen 6. Ebenso ist es denkbar, an einer Tragschiene 6 mehrere Geräteträger 7 zu befestigen. Innerhalb des Lichtbands 2 können einzelne Geräteträger 7 auch gleichzeitig an mehreren Tragschienen 6 befestigt sein.

Im gezeigten Beispiel der Fig. 2 weist der Geräteträger 7 an einer der Tragschiene 6 zugewandten Oberseite eine elektrische Kontakteinrichtung 8 sowie zumindest eine elektronische Baugruppe 9 auf. An einer von der Tragschiene 6 abgewandten Unterseite sind am Geräteträger 7 hier zwei elektrische Anschlüsse 10 vorgesehen, über die ein hier nicht dargestelltes Leuchtmittel an den Geräteträger 7 angebaut und elektrisch angeschlossen werden kann.

Die Tragschiene 6 ist als U-förmiger Profilkörper ausgestaltet und besitzt dementsprechend ein Basisprofil 11 und zwei davon abstehende Stegprofile 12. Das Basisprofil 11 und die Stegprofile 12 begrenzen an drei Seiten einen Innenraum 13 der Tragschiene 6 bzw. der Leuchte 2. Durch Anbringen des Geräteträgers 7 wird besagter Innenraum 13 an der dem Basisprofil 11 gegenüberliegenden vierten Seite verschlossen. Im Bereich des Basisprofils 11 kann bspw. ein Stromführungsprofil 14 angeordnet sein, das sich bandförmig im Wesentlichen über die gesamte Länge der Tragschiene 6 erstreckt und die Stromversorgung sowie die elektrische Ansteuerung elektrischer Verbraucher der Leuchte 2 ermöglicht.

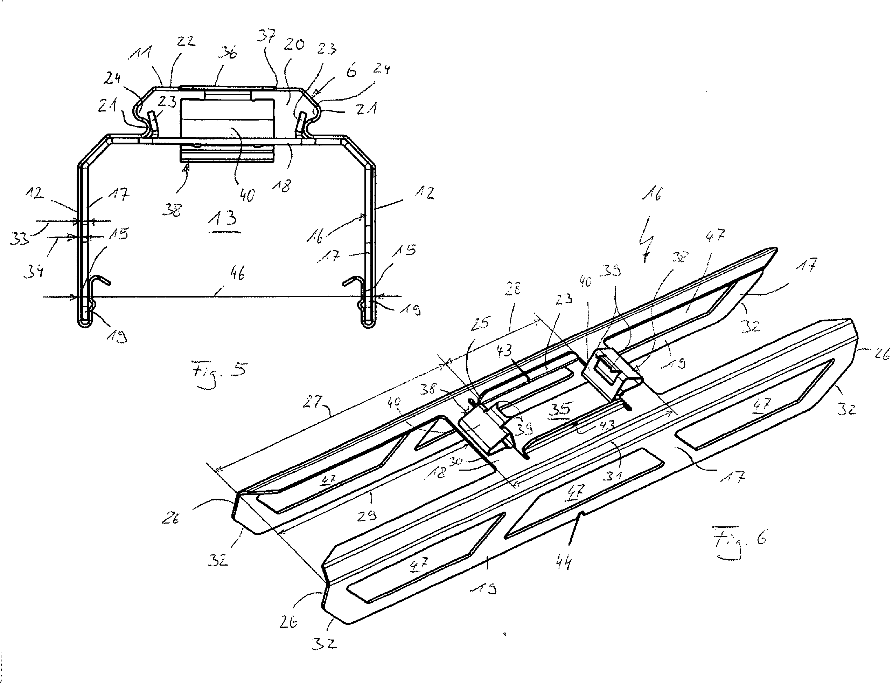

Entsprechend Fig. 5 weisen die beiden Stegprofile 12 jeweils an einem vom Basisprofil 11 entfernten Endbereich eine Tasche 15 auf. Die beiden Taschen 15 sind dabei jeweils an einer dem Innenraum 13 zugewandten Innenseite des jeweiligen Stegprofils 12 ausgebildet. Die beiden Taschen 15 sind dadurch realisiert, dass die Stegprofile 12 in ihrem Endbereich um etwa 180° nach innen umgebogen sind.

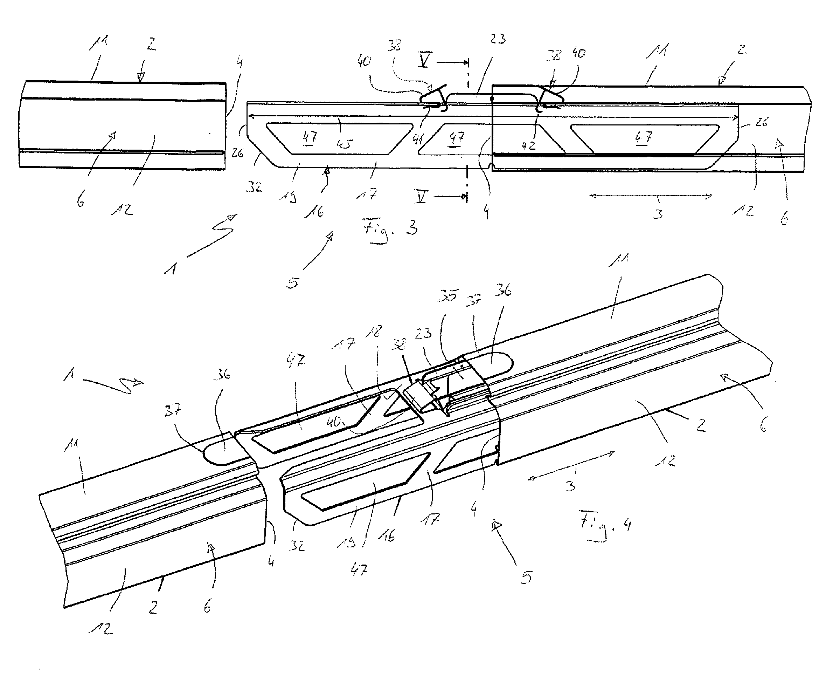

Entsprechend den Figuren 3 bis 5 wird zum Verbinden von zwei in der Längsrichtung 3 des Lichtbands 1 aufeinander folgenden Leuchten 2 ein Verbinder 16 verwendet. Besagter Verbinder 16 weist entsprechend Fig. 6 zwei Stegabschnitte 17 und einen Basisabschnitt 18 auf. Der Basisabschnitt 18 verbindet die beiden Stegabschnitte 17 so miteinander, dass der Verbinder 16 im Bereich des Basisabschnitts 18 U-förmig ausgestaltet ist. Dieser U-förmige Querschnitt ist in Fig. 5 besonders gut erkennbar. Der Verbinder 16 ist hinsichtlich seiner Abmessungen so konzipiert, dass er in die beiden miteinander zu verbindenden Tragschienen 6 stirnseitig, also axial einsteckbar ist. Im eingesteckten Zustand, der in Fig. 5 besonders deutlich erkennbar ist, kommen der Tragschiene 6 zugewandte Außenseiten des Verbinders 16 an dem Verbinder 16 zugewandten Innenseiten der Tragschiene 6 zur Anlage. Insoweit ist der Verbinder 16 hinsichtlich seiner Außenkontur weitgehend komplementär zur Innenkontur der Tragschienen 6 geformt. Beachtenswert ist dabei, dass die Stegabschnitte 17 des Verbinders 16 mit ihren vom Basisabschnitt 18 entfernten Endbereichen 19 in die Taschen 15 der Stegprofile 12 eingreifen. Die Taschen 15 können zweckmäßig so dimensioniert sein, dass sie die darin eingesteckten Endbereiche 19 der Stegabschnitte 17 klemmen. Hierdurch kann eine sichere Positionierung des Verbinders 16 in den Tragschienen 6 realisiert werden. Die Klemmung erhöht außerdem die Haftreibung und somit den Kraftschluss zwischen dem Verbinder 16 und den Tragschienen 6.

Wie insbesondere Fig. 5 entnehmbar ist, formt das Basisprofil 11 der jeweiligen Tragschiene 6 eine Kammer 20 aus, die zum Inneren 13 der Tragschiene 6 offen ist. Im Beispiel wird diese Kammer 20 durch zwei Wandprofile 21 sowie durch ein Bodenprofil 22 begrenzt. Das Bodenprofil 22 verbindet dabei die beiden Wandprofile 21 miteinander, wobei die beiden Wandprofile 21 parallel zu den Stegprofilen 12 verlaufen. In besagter Kammer 20 kann bspw. das Stromführungsprofil 14 untergebracht sein. Im gezeigten, bevorzugten Beispiel sind am Basisabschnitt 18 des Verbinders 16 zwei Wandabschnitte 23 ausgebildet, die bzgl. des Innenraums 13 nach außen abstehen. Dabei greifen diese Wandabschnitte 23 in die Kammer 20 ein. Ferner sind die Wandabschnitte 23 so positioniert und dimensioniert, dass sie mit ihren voneinander abgewandten Außenseiten an einander zugewandten Innenseiten der Wandprofile 21 zur Anlage kommen. Hierdurch wird die Position des Verbinders 16 in den Tragschienen 6 stabilisiert. Besonders zweckmäßig kann es sein, die Wandabschnitte 23 so auszulegen, dass sie zwischen den Wandprofilen 21 eingeklemmt sind, wodurch die kraftschlüssige Halterung des Verbinders 16 in den Tragschienen 6 signifikant verbessert werden kann.

Im gezeigten bevorzugten Beispiel formen die Wandprofile 21 jeweils einen Hinterschnitt 24 aus. Dieser befindet sich in der Kammer 20 und ist dadurch vom Innenraum 13 abgewandt. Die Wandabschnitte 23 des Verbinders 16 sind im Beispiel nun so geformt, dass sie den jeweiligen Hinterschnitt 24 des zugehörigen Wandprofils 21 hintergreifen. Hierdurch ergibt sich zusätzlich ein Formschluss, der die Übertragung von Biegemomenten zwischen den miteinander verbundenen Tragschienen 6 signifikant verbessert.

Die Wandabschnitte 23 des Verbinders 16 besitzen entsprechend Fig. 6 Längsenden 25, die von Längsenden 26 der Stegabschnitte 17 einen Längsabstand 27 aufweisen. Dies bedeutet für den Einsteckvorgang des Verbinders 16, dass zunächst nur die Stegabschnitte 17 in das Profil der jeweiligen Tragschiene 6 eingeführt werden und dass erst in einer Endphase des Steckvorgangs die Wandabschnitte 23 in das Profil der jeweiligen Tragschiene 6 eingeführt werden. Besagter Längsabstand 27 ist zweckmäßig mindestens gleich groß wie eine Länge 28 der Wandabschnitte 23. Im gezeigten Beispiel ist besagter Längsabstand 27 etwa doppelt so groß wie die Länge 28 der Wandabschnitte 23.

Ferner können die Längsenden 26 der Stegabschnitte 17 außerdem einen Längsabstand 29 von Längsenden 30 des Basisabschnittes 18 besitzen. Durch diese Bauweise erfolgt eine seitliche Abstützung der beiden Stegabschnitte 17 nicht über deren gesamte Länge, sondern beabstandet zu ihren Längsenden 26. Hierdurch wird das Einfädeln des Verbinders 16 in die Stirnseiten der Tragschienen 6 vereinfacht. Bspw. ist dieser Längsabstand 29 zumindest gleich groß wie eine Länge 31 des Basisabschnitts 18.

Um das Einführen der Stegabschnitte 17 in die Profile der Tragschienen 6 zusätzlich zu vereinfachen, können die Stegabschnitte 17 an ihren Längsenden 26, und zwar in den vom Basisabschnitt 18 entfernten Endbereichen 19 jeweils eine Einführschräge 32 aufweisen. Durch diese Einführschrägen 32 dringt beim Einsteckvorgang der Verbinder 16 zunächst außerhalb der Taschen 15 in die jeweilige Tragschiene 6 ein. Erst wenn sich durch eine bestimmte Eindringtiefe bereits eine gewisse Führungswirkung ergibt, kommen die Endbereiche 19 der Stegabschnitte 17 in Eingriff mit den Taschen 15.

Insgesamt kann der dem Einstecken des Verbinders 16 entgegengebrachte Widerstand somit gestuft werden. Zuerst dringen nur die Stegabschnitte 17 in die jeweilige Tragschiene 6 ein. Dann greifen die Endbereiche 19 der Stegabschnitte 17 in die Taschen 15 ein. Schließlich greifen die Wandabschnitte 23 in die Wandprofile 21 ein.

Entsprechend Fig. 5 besitzen der Verbinder 16 und die jeweilige Tragschiene 6 unterschiedliche Wandstärken. Im Beispiel ist eine Wandstärke 33 des Verbinders 16 etwa doppelt so groß wie eine Wandstärke 34 der Tragschiene 6. Da es sich bei den Tragschienen 6 sowie beim Verbinder 16 bevorzugt um Blechkörper handelt, entsprechen die genannten Wandstärken 33,34 Blechdicken. Dementsprechend besitzt der Verbinder 16 eine Blechdicke 33, während die jeweilige Tragschiene 6 eine Blechdicke 34 besitzt, die nur etwa halb so groß ist wie die Blechdicke 33 des Verbinders 16.

Entsprechend den Figuren 4 und 6 besitzt der Basisabschnitt 18 des Verbinders 16 eine Durchgangsöffnung 35. Diese ist zu den Stegabschnitten 17 hin durch die Wandabschnitte 23 begrenzt. Durch die Öffnung 35 sind die Kammer 20 und der Innenraum 13 miteinander verbunden.

Entsprechend Fig. 4 sind die Tragschienen 6 an ihren Längsenden bzw. an den Stossgrenzen 4 im Basisprofil 11 jeweils mit einem Ausbruchbereich 36 ausgestattet. Der jeweilige Ausbruchbereich 36 ist dabei über eine Sollbruchstelle 37 mit dem übrigen Basisprofil 11 verbunden. Die Ausbruchbereiche 36 können somit entlang der Sollbruchstellen 37 leicht ausgebrochen und somit besonders einfach vom Basisprofil 11 entfernt werden. Die ausgebrochenen Ausbruchbereiche 36 geben dann eine, hier nicht näher bezeichnete, Anschlussöffnung frei, die zur Durchgangsöffnung 35 des Verbinders 16 fluchtet. Auf diese Weise kann besonders einfach ein Kabeldurchgang geschaffen werden, der es ermöglicht, die im Inneren des Lichtbands 1 verlaufende Verkabelung mit einer Gebäudeenergieversorgung zu verbinden. Die Ausbruchbereiche 36 besitzen in der Draufsicht auf eine vom Geräteträger 7 abgewandte Oberseite der Tragschiene 6 im Beispiel ein U-Profil. Hierdurch bilden die beiden ausgebrochenen Ausbruchbereiche 36 zusammen eine ovale Anschlussöffnung. Im Querschnitt der Fig. 5 ist einer der Ausbruchbereiche 36 mit seiner Sollbruchstelle 37 erkennbar.

Entsprechend den Figuren 3 bis 6 ist der Verbinder 16 für jede Tragschiene 6 mit wenigstens einer Schutzleitereinrichtung 38 ausgestattet. Im Beispiel ist der Verbinder 16 mit genau zwei Schutzleitereinrichtungen 38 ausgestattet, die jeweils einer der Tragschienen 6 zugeordnet sind. Diese Schutzleitereinrichtungen 38 sind so ausgestaltet, dass sie beim Einstecken des Verbinders 16 in die jeweilige Tragschiene 6 eine elektrische Verbindung zwischen dem Verbinder 16 und der jeweiligen Tragschiene 6 herstellen. Hierdurch werden die Tragschienen 6 jeweils mit dem Verbinder 16 und über diesen miteinander elektrisch leitend verbunden. Hierdurch kann somit eine Durchkontaktierung für einen elektrischen Schutzleiter gewährleistet werden. Zur Realisierung dieser automatischen Herstellung der elektrischen Kontaktierung zwischen Verbinder 16 und den Tragschienen 6 kann die jeweilige Schutzleitereinrichtung 38 mit wenigstens einer Kratzkante 39 ausgestattet sein. Im Beispiel besitzt die jeweilige Schutzleitereinrichtung 38 jeweils zwei derartige Kratzkanten 39. Beim Einstecken des Verbinders 16 können diese Kratzkanten 39 eine elektrisch isolierende Beschichtung bzw. eine elektrisch isolierende Lackierung der jeweiligen Tragschiene 6 lokal entfernen. Die jeweilige Beschichtung oder Lackierung wird dabei abgekratzt. Da die Tragschienen 6 und der Verbinder 16 aus Blech hergestellt sind, kann über die Schutzleitereinrichtung 38 somit die gewünschte elektrische Verbindung realisiert werden.

Bei den hier gezeigten, bevorzugten Ausführungsformen ist die jeweilige Schutzleitereinrichtung 38 außerdem als Ausziehsicherung für den in die jeweilige Tragschiene 6 eingesteckten Verbinder 16 ausgestaltet. Mit anderen Worten, der in die jeweilige Tragschiene 6 eingesteckte Verbinder 16 ist in Auszugsrichtung mit Hilfe der Schutzleitereinrichtung 38 gesichert, wodurch ein Ausziehen des Verbinders 16 aus der jeweiligen Tragschiene 6 erheblich erschwert und bei den üblicherweise auftretenden Belastungen nicht möglich ist.

Die jeweilige Schutzleitereinrichtung 38 ist zweckmäßig außerdem so konzipiert, dass ihre elektrische Kontaktierung mit der jeweiligen Tragschiene 6 mit Hilfe eines Werkzeugs, z.B. mit Hilfe eines Schraubendrehers mit Flachprofil, ohne Zerstörung der Schutzleitereinrichtung 38 lösbar ist. Sofern die Schutzleitereinrichtung 38 außerdem als Ausziehsicherung konzipiert ist, kann mit Hilfe des jeweiligen Werkzeugs auch diese Ausziehsicherung gelöst werden, ohne dass dabei eine Zerstörung der Schutzleitereinrichtung 38 erfolgt.

Grundsätzlich kann die jeweilige Schutzleitereinrichtung 38 integral am Verbinder 16 ausgeformt sein. Bevorzugt wird jedoch die hier vorgestellte Ausführungsform, bei welcher die jeweilige Schutzleitereinrichtung 38 durch ein bzgl. des Verbinders 16 separates Bauteil gebildet ist. Dabei ist die Schutzleitereinrichtung 38 zweckmäßig als Klammer 40 ausgestaltet, die im Folgenden auch als Schutzleiterklammer 40 bezeichnet wird. Die jeweilige Schutzleiterklammer 40 ist an den Verbinder 16 angebaut. Bspw. ist die Schutzleiterklammer 40 aus einem Federstahl hergestellt und mit einer Klemmtasche 41 ausgestattet, die in Fig. 3 erkennbar ist. Mit Hilfe dieser Klemmtasche 41 ist die jeweilige Schutzleiterklammer 40 an den Basisabschnitt 18 aufgesteckt. Zweckmäßig ist die Schutzleiterklammer 40 dabei durch die Durchgangsöffnung 35 am Basisabschnitt 18 angesetzt. An der Schutzleiterklammer 40 ist ein Betätigungshaken 42 ausgeformt, an dem das jeweilige Werkzeug zum Lösen der Schutzleiterklammer 40 angreifen kann.

Entsprechend Fig. 6 kann am jeweiligen Wandabschnitt 23 jeweils ein Anschlag 43 ausgebildet sein, der die Einstecktiefe des Verbinders 16 in die jeweilige Tragschiene 6 begrenzt. Zweckmäßig ist der jeweilige Anschlag 43 bzgl. des jeweiligen Wandabschnitts 23 mittig angeordnet. Des Weiteren besitzt der jeweilige Stegabschnitt 17 in seinem Endbereich 19 an einer vom Basisabschnitt 18 abgewandten Seite eine Kerbe 44. Diese Kerben 44 sind dabei in der gleichen Querschnittsebene angeordnet, in der sich auch die Anschläge 43 befinden. Die Kerben 44 können bspw. zum Positionieren einer Dichtung verwendet werden.

Der Verbinder 16 ist entsprechend der hier gezeigten Ausführungsformen symmetrisch aufgebaut. Bspw. ist er bzgl. einer mittig angeordneten Querschnittsebene spiegelsymmetrisch ausgebildet. Zusätzlich ist der Verbinder 16 bzgl. einer parallel zu den Stegabschnitten 17 verlaufenden Längsebene spiegelsymmetrisch aufgebaut.

Der Verbinder 16 besitzt entsprechend Fig. 3 eine Gesamtlänge 45, die zumindest dreimal größer ist als eine in Fig. 5 eingezeichnete Breite 46 der Tragschiene 6. Bspw. liegt die Länge 45 des Verbinders 16 in einem Wertebereich, der mindestens dreimal und höchstens sechsmal größer ist als die Breite 46 der Tragschiene 6.

Beim gezeigten Verbinder 16 sind die Stegabschnitte 17 mit mehreren Durchbrüchen 47 versehen, so dass eine Fachwerkstruktur entsteht. Hierdurch lässt sich z.B. das Gewicht des Verbinders 16 signifikant reduzieren.

## Patentansprüche

1. Lichtband mit mindestens zwei Leuchten (2),
- wobei jede Leuchte (2) eine Tragschiene (6) aufweist, an der zumindest ein Geräteträger (7) befestigbar ist,
- wobei die jeweilige Tragschiene (6) U-förmig ausgestaltet ist und ein Basisprofil (11) sowie zwei Stegprofile (12) aufweist,
- wobei das jeweilige Stegprofil (12) an einem vom Basisprofil (11) entfernten Endbereich an einer jeweils dem anderen Stegprofil (12) zugewandten Innenseite eine Tasche (15) ausbildet,
- wobei zumindest zwei Leuchten (2), die in der Längsrichtung (3) des Lichtbands (1) aufeinander folgen, über einen Verbinder (16) aneinander befestigt sind,
- wobei der Verbinder (16) zwei Stegabschnitte (17) und einen Basisabschnitt (18) aufweist, der die beiden Stegabschnitte (17) so miteinander verbindet, dass der Verbinder (16) zumindest im Bereich des Basisabschnitts (18) U-förmig ausgestaltet ist,
- wobei der Verbinder (16) in die beiden Tragschienen (6) der beiden aufeinander folgenden Leuchten (2) stirnseitig eingesteckt ist,
- wobei der jeweiligen Tragschiene (6) zugewandte Außenseiten des Verbinders (16) an dem Verbinder (16) zugewandten Innenseiten der Tragschienen (6) anliegen,
- wobei die Stegabschnitte (17) des Verbinders (16) mit ihren vom Basisabschnitt (18) entfernten Endbereichen (19) in die Taschen (15) der Stegprofile (12) eingreifen,
- wobei das Basisprofil (11) der jeweiligen Tragschiene (6) eine zum Inneren (13) der Tragschiene (6) offene Kammer (20) ausbildet, die durch zwei parallel zu den Stegprofilen (12) verlaufende Wandprofile (21) und durch ein die Wandprofile (21) miteinander verbindendes Bodenprofil (22) begrenzt ist,
- wobei am Basisabschnitt (18) des Verbinders (16) nach außen abstehende Wandabschnitte (23) ausgebildet sind, die in die Kammer (20) eingreifen und mit ihren voneinander abgewandten Außenseiten an einander zugewandten Innenseiten der Wandprofile (21) anliegen,
**dadurch gekennzeichnet,**
- **dass** die Wandprofile (21) jeweils einen Hinterschnitt (24) ausformen,
- **dass** die Wandabschnitte (23) so geformt sind, dass sie den jeweiligen Hinterschnitt (24) des zugehörigen Wandprofils (21) hintergreifen.

2. Lichtband nach Anspruch 1,
**dadurch gekennzeichnet,**
**dass** Längsenden (25) der Wandabschnitte (23) von Längsenden (26) der Stegabschnitte (17) jeweils einen Längsabstand (27) aufweisen.

3. Lichtband nach Anspruch 2,
**dadurch gekennzeichnet,**
**dass** der jeweilige Längsabstand (27) mindestens gleich groß oder mindestens doppelt so groß ist wie eine Länge (28) der Wandabschnitte (23).

4. Lichtband nach einem der Ansprüche 1 bis 3,
**dadurch gekennzeichnet,**
**dass** der Verbinder (16) und die Tragschienen (6) aus Blech hergestellt sind, wobei eine Blechdicke (33) beim Verbinder (16) größer ist als, insbesondere mindestens doppelt so groß ist wie, eine Blechdicke (34) bei den Tragschienen (6).

5. Lichtband nach einem der Ansprüche 1 bis 4,
**dadurch gekennzeichnet,**
**dass** Längsenden (30) des Basisabschnitts (18) von Längsenden (26) der Stegabschnitte (17) jeweils einen Längsabstand (29) aufweisen.

6. Lichtband nach Anspruch 5,
**dadurch gekennzeichnet,**
**dass** der jeweilige Längsabstand (29) mindestens gleich groß ist wie eine Länge (31) des Basisabschnitts (18).

7. Lichtband nach einem der Ansprüche 1 bis 6,
**dadurch gekennzeichnet,**
**dass** die Stegabschnitte (17) an ihren Längsenden (26) in den vom Basisabschnitt (18) entfernten Endbereichen (19) Einführschrägen (32) aufweisen.

8. Lichtband nach einem der Ansprüche 1 bis 7,
**dadurch gekennzeichnet,**
- **dass** der Basisabschnitt (18) eine Durchgangsöffnung (35) aufweist,
- **dass** die Tragschienen (6) an ihren Längsenden im Basisprofil (11) jeweils einen Ausbruchbereich (36) aufweisen, der über eine Sollbruchstelle (37) mit dem übrigen Basisprofil (11) verbunden ist und der, wenn er ausgebrochen ist, eine zur Durchgangsöffnung (35) des Verbinders (16) fluchtende Anschlussöffnung freigibt.

9. Lichtband nach einem der Ansprüche 1 bis 8,
**dadurch gekennzeichnet,**
**dass** der Verbinder (16) für jede Tragschiene (6) zumindest jeweils eine Schutzleitereinrichtung (38) aufweist, die beim Einstecken des Verbinders (16) in die
jeweilige Tragschiene (6) eine elektrische Verbindung zwischen dem Verbinder (16) und der jeweiligen Tragschiene (6) herstellt.

10. Lichtband nach Anspruch 9,
**dadurch gekennzeichnet,**
**dass** die jeweilige Schutzleitereinrichtung (38) zumindest eine Kratzkante (39) aufweist, die beim Einstecken des Verbinders (16) eine elektrisch isolierende Beschichtung oder Lackierung der jeweiligen Tragschiene (6) lokal entfernt.

11. Lichtband nach Anspruch 9 oder 10,
**dadurch gekennzeichnet,**
**dass** die jeweilige Schutzleitereinrichtung (3) außerdem als Ausziehsicherung für den in die jeweilige Tragschiene (6) eingesteckten Verbinder (16) ausgestaltet ist.

12. Lichtband nach einem der Ansprüche 9 bis 11,
**dadurch gekennzeichnet,**
**dass** die jeweilige Schutzleitereinrichtung (38) so ausgestaltet ist, dass ihre Kontaktierung mit der jeweiligen Tragschiene (6) mittels eines Werkzeugs ohne Zerstörung der Schutzleitereinrichtung (38) lösbar ist.

13. Lichtband nach einem der Ansprüche 9 bis 12,
**dadurch gekennzeichnet,**
**dass** die jeweilige Schutzleitereinrichtung (38) als Schutzleiterklammer (40) ausgestaltet ist, die bzgl. des Verbinders (16) ein separates Bauteil ist und an den Verbinder (16) angebaut ist.

## Claims

1. Light strip with at least two lamps (2),
- wherein each lamp (2) has a support rail (6) on which at least one device support (7) can be fastened,
- wherein the respective support rail (6) is configured in a U-shaped manner and has a base profile (11) and also two web profiles (12),
- wherein the respective web profile (12) forms a rebate (15) at an end region remote from the base profile (11) on an inner side facing the other web profile (12) in each case,
- wherein at least two lamps (2), which follow one another in the longitudinal direction (3) of the light strip (1), are fixed to one another via a connector (16),
- wherein the connector (16) has two web sections (17) and one base section (18) which connects the two web sections (17) to one another in such a manner that the connector (16) is configured in a U-shaped manner at least in the region of the base section (18),
- wherein the connector (16) is inserted at the front into the two support rails (6) of the two lamps (2) which follow one another,
- wherein outer sides of the connector (16) facing the respective support rail (6) bear against inner sides of the support rails (6) facing the connector (16),
- wherein the web sections (17) of the connector (16) engage with their end regions (19) remote from the base section (18) into the rebates (15) of the web profiles (12),
- wherein the base profile (11) of the respective support rail (6) forms a chamber (20) open towards the interior (13) of the support rail (6), which is delimited by two wall profiles (21) running parallel to the web profiles (12) and by a base profile (22) connecting the wall profiles (21) to one another,
- wherein outwardly protruding wall sections (23) are formed on the base section (18) of the connector (16), which engage into the chamber (20) and bear with their outer sides, which face away from one another, against inner sides of the wall profiles (21) which face one another, **characterised**
- **in that** the wall profiles (21) in each case form an undercut (24),
- **in that** the wall sections (23) are shaped in such a manner that they engage behind the respective undercut (24) of the associated wall profile (21).

2. Light strip according to Claim 1,
**characterised**
**in that** longitudinal ends (25) of the wall sections (23) have a longitudinal spacing (27) from longitudinal ends (26) of the web sections (17) in each case.

3. Light strip according to Claim 2,
**characterised**
**in that** the respective longitudinal spacing (27) is at least as large or at least twice as large as a length (28) of the wall sections (23).

4. Light strip according to any one of Claims 1 to 3,
**characterised**
**in that** the connector (16) and the support rails (6) are produced from sheet metal, wherein a sheet thickness (33) in the case of the connector (16) is larger than, in particular at least twice as large as, a sheet thickness (34) in the case of the support rails (6).

5. Light strip according to any one of Claims 1 to 4,
**characterised**
**in that** longitudinal ends (30) of the base section (18) have a longitudinal spacing (29) from longitudinal ends (26) of the web sections (17) in each case.

6. Light strip according to Claim 5,
**characterised**
**in that** the respective longitudinal spacing (29) is at least as large as a length (31) of the base section (18).

7. Light strip according to any one of Claims 1 to 6,
**characterised**
**in that** the web sections (17) have insertion chamfers (32) at their longitudinal ends (26) in the end regions (19) remote from the base section (18).

8. Light strip according to any one of Claims 1 to 7,
**characterised**
- **in that** the base section (18) has a through opening (35),
- **in that** the support rails (6) in each case have a break-out region (36) at their longitudinal ends in the base profile (11), which is connected via a predetermined breaking point (37) to the remaining base profile (11) and which, when it is broken out, releases a connection opening which is flush with the through opening (35) of the connector (16).

9. Light strip according to any one of Claims 1 to 8,
**characterised**
**in that** the connector (16) has at least one earth cable apparatus (38) for each support rail (6) in each case, which produces an electrical connection between the connector (16) and the respective support rail (6) when the connector (16) is plugged into the respective support rail (6).

10. Light strip according to Claim 9,
**characterised**
**in that** the respective protective earth apparatus (38) has at least one scrape level (39) which locally removes an electrically insulating coating or paintwork of the respective support rail (6) when the connector (16) is plugged in.

11. Light strip according to Claim 9 or 10,
**characterised**
**in that** the respective protective earth apparatus (3) is additionally configured as pull-out fuse for the connector (16) plugged into the respective support rail (6).

12. Light strip according to any one of Claims 9 to 11,
**characterised**
**in that** the respective protective earth apparatus (38) is configured in such a manner that its contacting with the respective support rail (6) is releasable by means of a tool without destruction of the protective earth apparatus (38).

13. Light strip according to any one of Claims 9 to 12,
**characterised**
**in that** the respective protective earth apparatus (38) is configured as a protective earth clip (40) which is a separate component with respect to the connector (16) and is attached to the connector (16).

## Revendications

1. Bande lumineuse présentant au moins deux luminaires (2),
- chaque luminaire (2) présentant un rail porteur (6), sur lequel au moins un support d'appareil (7) peut être fixé,
- le rail porteur (6) respectif étant conçu en forme de U et présentant un profilé de base (11) et deux profilés à nervure (12),
- le profilé à nervure (12) respectif formant une poche (15) sur une zone d'extrémité éloignée du profilé de base (11) sur un côté intérieur tourné respectivement vers l'autre profilé à nervure (12),
- au moins deux luminaires (2), qui se suivent dans le sens longitudinal (3) de la bande lumineuse (1), étant fixés l'un à l'autre au moyen d'un connecteur (16),
- le connecteur (16) présentant deux parties de nervure (17) et une partie de base (18), qui relie les deux parties de nervure (17) l'une à l'autre, de telle sorte que le connecteur (16) est conçu en forme de U au moins dans la zone de la partie de base (18),
- le connecteur (16) des deux rails porteurs (6) des deux luminaires (2) consécutifs étant enfiché côté avant,
- des côtés extérieurs, tournés vers le rail porteur (6) respectif, du connecteur (16) s'appliquant sur des côtés intérieurs, tournés vers le connecteur (16), des rails porteurs (6),
- les parties de nervure (17) du connecteur (16) s'engageant avec leurs zones d'extrémité (19) éloignées de la partie de base (18) dans les poches (15) des profilés à nervure (12),
- le profilé de base (11) du rail porteur (6) respectif formant une chambre (20) ouverte vers l'intérieur (13) du rail porteur (6), laquelle chambre est délimitée par deux profilés de paroi (21) agencés parallèlement aux profilés à nervure (12) et par un profilé de sol (22) reliant entre eux les profilés de paroi (21),
- des parties de paroi (23) dépassant vers l'extérieur étant formées sur la partie de base (18) du connecteur (16), lesquelles parties s'engagent dans la chambre (20) et s'appliquent avec leurs côtés extérieurs opposés les uns aux autres sur les côtés intérieurs tournés les uns vers les autres des profilés de paroi (21),
**caractérisée**
- **en ce que** les profilés de paroi (21) forment à chaque fois une contre-dépouille (24),
- **en ce que** les parties de paroi (23) sont formées de telle sorte qu'elles saisissent par l'arrière la contre-dépouille (24) respective du profilé de paroi (21) spécifique.

2. Bande lumineuse selon la revendication 1,
**caractérisée en ce que**
les extrémités longitudinales (25) des parties de paroi (23) présentent à chaque fois un espacement longitudinal (27) par rapport aux extrémités longitudinales (26) des parties de nervure (17).

3. Bande lumineuse selon la revendication 2,
**caractérisée en ce que**
l'espacement longitudinal (27) respectif est au moins aussi grand ou au moins deux fois plus grand qu'une longueur (28) des parties de paroi (23).

4. Bande lumineuse selon l'une quelconque des revendications 1 à 3,
**caractérisée en ce que**
le connecteur (16) et les rails porteurs (6) sont fabriqués en tôle, une épaisseur de tôle (33) sur le connecteur (16) étant plus grande, en particulier au moins deux fois plus grande, qu'une épaisseur de tôle (34) sur les rails porteurs (6).

5. Bande lumineuse selon l'une quelconque des revendications 1 à 4,
**caractérisée en ce que**
les extrémités longitudinales (30) de la partie de base (18) présentent à chaque fois un espacement longitudinal (29) par rapport aux extrémités longitudinales (26) des parties de nervure (17).

6. Bande lumineuse selon la revendication 5,
**caractérisée en ce que**
l'espacement longitudinal (29) respectif est au moins aussi grand qu'une longueur (31) de la partie de base (18).

7. Bande lumineuse selon l'une quelconque des revendications 1 à 6,
**caractérisée en ce que**
les parties de nervure (17) présentent des chanfreins d'entrée (32) sur leurs extrémités longitudinales (26) dans les zones d'extrémité (19) éloignées de la partie de base (18).

8. Bande lumineuse selon l'une quelconque des revendications 1 à 7,
**caractérisée**
- **en ce que** la partie de base (18) présente une ouverture de passage (35),
- **en ce que** les rails porteurs (6) présentent sur chacune de leurs extrémités longitudinales dans le profilé de base (11) à chaque fois une zone de creux (36), qui est reliée par un point de rupture théorique (37) au profilé de base (11) restant et qui, lorsqu'il est évidé, libère une ouverture de raccordement s'alignant avec l'ouverture de passage (35) du connecteur (16).

9. Bande lumineuse selon l'une quelconque des revendications 1 à 8,
**caractérisée en ce que** le connecteur (16) présente pour chaque rail porteur (6) au moins à chaque fois un dispositif conducteur de protection (38), qui, lors de l'enfichage du connecteur (16) dans le rail porteur (6) respectif, établit une liaison électrique entre le connecteur (16) et le rail porteur (6) respectif.

10. Bande lumineuse selon la revendication 9,
**caractérisée**
**en ce que** le dispositif conducteur de protection (38) respectif présente au moins une arête de grattage (39), qui, lors de l'enfichage du connecteur (16), enlève localement un revêtement électro-isolant ou un laquage électro-isolant du rail porteur (6) respectif.

11. Bande lumineuse selon la revendication 9 ou 10,
**caractérisée en ce que**
le dispositif conducteur de protection (3) respectif est conçu d'autre part comme blocage d'extraction pour le connecteur (16) enfiché dans le rail porteur (6) respectif.

12. Bande lumineuse selon l'une quelconque des revendications 9 à 11,
**caractérisée en ce que**
le dispositif conducteur de protection (38) respectif est conçu de telle sorte que sa mise en contact avec le rail porteur (6) respectif peut être détachée au moyen d'un outil sans détruire le dispositif conducteur de protection (38).

13. Bande lumineuse selon l'une quelconque des revendications 9 à 12,
**caractérisée en ce que**
le dispositif conducteur de protection (38) respectif est conçu comme agrafe conductrice de protection (40), qui est un composant séparé par rapport au connecteur (16) et est rapporté sur le connecteur (16).
